# EUROPEAN PATENT APPLICATION

(11) **EP 4 553 967 A1**
(43) Date of publication of application: **14.05.2025**
(21) Application number: 23218005.9
(22) Date of filing: 19.12.2023
(51) Int. Cl.: H01M 50/107, H01M 50/152, H01M 50/528, H01M 50/531, H01M 10/04, H01M 10/052

(54) **SECONDARY BATTERY, BATTERY ASSEMBLY AND ELECTRONIC DEVICE**

(30) Priority: 07.11.2023 CN 202323003181 U
(71) Applicant: AESC Japan Ltd., Yokohama-Shi, Kanagawa 220-0012 (JP)
(72) Inventor: QIAN, Jia, Jiangyin City, Wuxi City, Jiangsu Province, 214443 (CN); CHE, Peipei, Jiangyin City, Wuxi City, Jiangsu Province, 214443 (CN)
(74) Representative: Becker, Eberhard

(57) **Abstract**

Disclosed are a secondary battery (10), a battery assembly (20) and an electronic device (30). The secondary battery (10) includes: a housing (1), an end cap (2), an electrode assembly (3) and a current collecting component (4). The housing (1) includes an end wall (11) and a side wall (12) surrounding the end wall (11). The side wall (12) includes: a recessed portion (14) recessed toward the interior of the housing (1), a body portion (15) extending between the recessed portion (14) and the end wall (11) and a transition portion (16) between the recessed portion (14) and the body portion (15); the electrode assembly (3) is disposed in the housing (1); the current collecting component (4) includes a current collector (41) and a housing connection portion (42), and the housing connection portion (42) is disposed between the recessed portion (14) and the electrode assembly (3).

## Description

### BACKGROUND

### Technical Field

The disclosure relates to the field of battery technology, and specifically relates to a secondary battery, a battery assembly and an electronic device.

### Description of Related Art

In the related art, when secondary batteries are processed, the current collecting component is normally disposed in the housing of the secondary battery, and the current collecting component is welded to the side wall of the housing. Then roll grooving is performed on the side wall of the housing, and finally the opening is pier-sealed to seal and dispose an end cap at the opening of the housing, thereby completing the mechanical sealing of the secondary battery.

When performing roll grooving on the side wall, a bending portion will be formed on the side wall , and when the bending portion on the side wall partially coincides with the welding position where the current collecting component and the side wall are welded, the concavity of the side wall in the roll grooving process will produce a large pulling force on the welding mark formed by the welding between the current collecting component and the side wall, and the large pulling force will be very likely to damage the welding mark. As a result, the connection between the current collecting component and the side wall will be weak, and the weak connection will in turn affect the stability of the electrical connection between the current collecting component and the housing, and ultimately affect the electrical connection performance of the battery.

### SUMMARY

In view of the above shortcomings of the related art, the present disclosure provides a secondary battery, a battery assembly and an electronic device to solve the technical problem described above, that is, when performing roll grooving on the housing of the battery, it is very likely to cause damage to the welding mark formed by the welding between the current collecting component and the housing, which affects the stability of the electrical connection between the current collecting component and the housing.

In order to achieve the above purpose and other related purposes, the present disclosure provides a secondary battery, which includes: a housing, an end cap, an electrode assembly and a current collecting component. The housing includes an end wall and a side wall surrounding the end wall. An opening is formed on one side of the side wall facing away from the end wall. The side wall includes: a recessed portion formed near the opening and is recessed toward the interior of the housing, a body portion extending between the recessed portion and the end wall and a transition portion between the recessed portion and the body portion; the end cap is disposed on the opening side to seal the opening; the electrode assembly is disposed in the housing, a first tab is disposed on one side of the electrode assembly facing the opening; the current collecting component includes a current collector and a housing connection portion, the current collector is electrically connected to the first tab, and the housing connection portion is disposed between the recessed portion and the electrode assembly; wherein the housing connection portion is welded to the body portion and/or the transition portion.

In an example of the secondary battery of the present disclosure, the housing connection portion includes a bent portion extending toward the recessed portion, and the bent portion abuts against and is welded to the body portion and/or the transition portion.

In an example of the secondary battery of the present disclosure, the body portion has a constant cross-section structure, and an included angle is formed between the bent portion and the body portion, and the included angle ranges from 0° to 60°.

In an example of the secondary battery of the present disclosure, the housing connection portion further includes a flange portion, and the flange portion is connected to the bent portion and bent toward the interior of the housing.

In an example of the secondary battery of the present disclosure, the housing connection portion is disposed on the outer periphery of the current collector. The housing connection portion includes a groove that is recessed toward the electrode assembly side. The groove includes a groove bottom wall and the outer groove wall and the inner groove wall connected to both sides of the groove bottom wall. The outer groove wall is connected to the bent portion, and the inner groove wall is connected to the current collector.

In an example of the secondary battery of the present disclosure, along the height direction of the secondary battery, the orthographic projections of the current collector and the inner groove wall cover the first tab.

In an example of the secondary battery of the present disclosure, along the height direction of the secondary battery, the first tab includes an indentation recessed toward one side facing away from the current collecting component, and the groove bottom wall of the groove abuts against the indentation.

In an example of the secondary battery of the present disclosure, along the height direction of the secondary battery, the distance between the position where the bent portion abuts the body portion and the groove bottom wall is d, and 0.3mm≤d≤2.5mm.

In an example of the secondary battery of the present disclosure, along the radial direction of the secondary battery, the width of the groove is W1, the radial depth of the recessed portion is W2, and W1≤0.7W2.

In an example of the secondary battery of the present disclosure, along the height direction of the secondary battery, the distance between the current collector and the groove bottom wall is h2, and d≥0.5h2.

In an example of the secondary battery of the present disclosure, the recessed portion includes a depressing portion bent toward the electrode assembly side on one side of the recessed portion close to the axis of the secondary battery, and the depressing portion at least partially abuts against the current collector.

In an example of the secondary battery of the present disclosure, there are a plurality of housing connection portions, and the plurality of housing connection portions are spaced apart on the outer periphery of the current collector.

In an example of the secondary battery of the present disclosure, the current collector includes a lead-out portion on one side of the current collector facing away from the electrode assembly, and the lead-out portion is electrically connected to the end cap.

The present disclosure further provides a battery assembly, which includes the secondary battery described in any one of the above examples.

The present disclosure further provides an electronic device, which includes the above-mentioned battery assembly.

In the secondary battery of the present disclosure, by welding and connecting the housing connection portion to the body portion and/or the transition portion, the welding position between the current collecting component and the housing may be set away from the recessed portion, so it is possible to reduce the pulling and deformation of the welding region between the current collecting component and housing during the forming process of the recessed portion. Accordingly, it is possible to decrease the damage to the welding marks in the welding region, thereby enhancing the stability of the welding connection between the current collecting component and housing.

### BRIEF DESCRIPTION OF THE DRAWINGS

In order to explain the embodiments of the present disclosure or the technical solutions in the related art more clearly, the drawings needed to be used in the description of the embodiments or the prior art will be briefly introduced below. Clearly, the drawings in the following description are only some embodiments of the present disclosure. For those of ordinary skill in the art, other embodiments can be obtained based on these drawings without exerting creative efforts.
FIG. 1 is an overall three-dimensional schematic view of an embodiment of a secondary battery of the present disclosure.
FIG. 2 is a partial cross-sectional view of an embodiment of the secondary battery of the present disclosure.
FIG. 3 is a partial enlarged view of a region A in FIG. 2.
FIG. 4 is a partial enlarged view of the welding position between the housing connection portion and the side wall in an embodiment of the secondary battery of the present disclosure.
FIG. 5 is a partial enlarged view of the welding position between the bent portion and the side wall in an embodiment of the secondary battery of the present disclosure.
FIG. 6 is a schematic structural view of the current collecting component in an embodiment of the secondary battery of the present disclosure.
FIG. 7 is a structural top view of the current collecting component in the embodiment shown in FIG. 6.
FIG. 8 is a partial cross-sectional view along the direction B-B in FIG. 7.
FIG. 9 is a schematic structural view of the current collecting component in another embodiment of the secondary battery of the present disclosure.
FIG. 10 is a structural top view of the current collecting component in the embodiment shown in FIG. 9.
FIG. 11 is a partial cross-sectional view along the direction C-C in FIG. 10.
FIG. 12 is a schematic partial structural view of a secondary battery according to an embodiment of the present disclosure with the end cap removed.
FIG. 13 is a schematic view of the configuration position between the current collecting component and the electrode assembly in an embodiment of the secondary battery of the present disclosure.
FIG. 14 is a structural cross-sectional view of the current collecting component in yet another embodiment of the secondary battery of the present disclosure.
FIG. 15 is a partial enlarged view of a region D in FIG. 14.
FIG. 16 is an exploded view of the configuration position between the current collecting component and the first tab in an embodiment of the secondary battery of the present disclosure.
FIG. 17 is an exploded view of the configuration position between the current collecting component and the first tab in another embodiment of the secondary battery of the present disclosure.
FIG. 18 is a partial enlarged view of the configuration position between the recessed portion and the current collecting component in an embodiment of the secondary battery of the present disclosure.
FIG. 19 is a schematic view of the overall structure of an embodiment of the battery assembly of the present disclosure.
FIG. 20 is a schematic structural view of the battery assembly of the present disclosure disposed on a vehicle.

### DESCRIPTION OF THE EMBODIMENTS

The following describes the implementation of the present disclosure through specific examples. Those skilled in the art can easily understand other advantages and effects of the present disclosure from the contents disclosed in this specification. The present disclosure can also be implemented or applied through other different specific implementations. Various details in this specification can also be modified or changed in various ways based on different viewpoints and applications without departing from the spirit of the present disclosure. It should be noted that, as long as there is no conflict between the embodiments, the following embodiments and the features in the embodiments may be combined with each other. It should also be understood that the terminology used in the embodiments of the present disclosure is for describing specific embodiments, but not for limiting the scope of the present disclosure. Test methods without specifying specific conditions in the following examples usually adopt conventional conditions or conditions recommended by various manufacturers.

When an embodiment provides a numerical range, it should be understood that, unless otherwise stated in the present disclosure, the two endpoints of each numerical range and any value between the two endpoints may be selected. Unless otherwise defined, all technical and scientific terms used in the present disclosure are consistent with the knowledge of the related art and the description of the present disclosure by those skilled in the art. They may also be used with the methods and methods described in the embodiments of the present disclosure. Equipment and materials are similar or equivalent to any methods, equipment and materials of the related art to implement the present disclosure.

It should be noted that terms such as "upper", "lower", "left", "right", "middle" and "one" cited in this specification are only for convenience of description and are not used to limit the scope of this specification. As for the implementable scope of the disclosure, changes or adjustments in the relative relationships shall also be regarded as the implementable scope of the disclosure, provided there is no substantial change in the technical content.

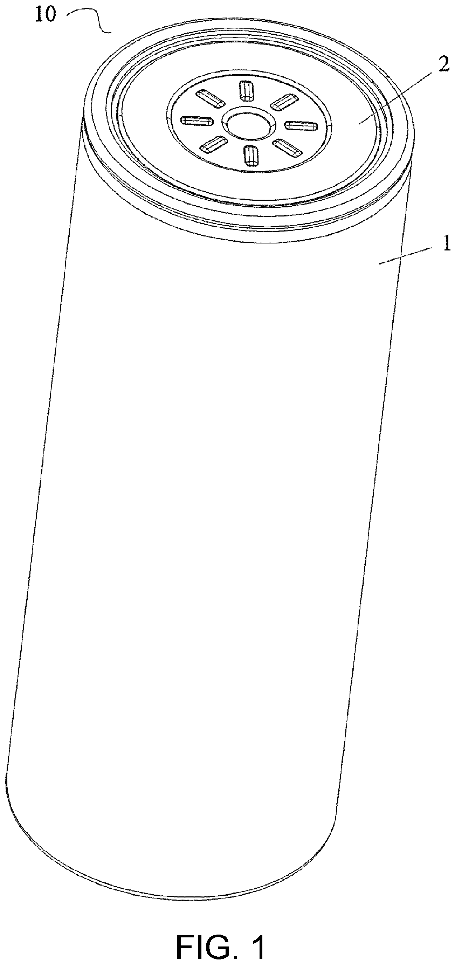

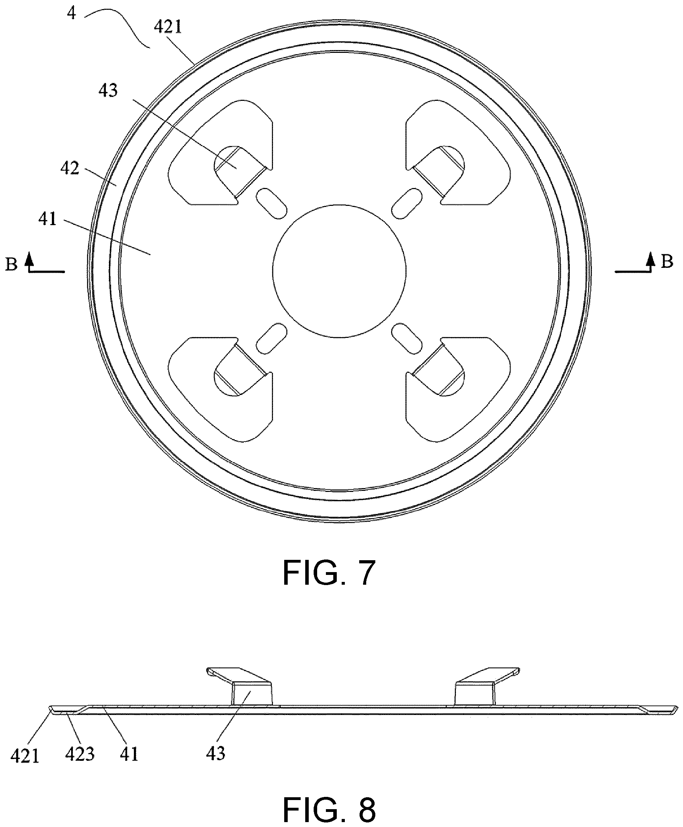

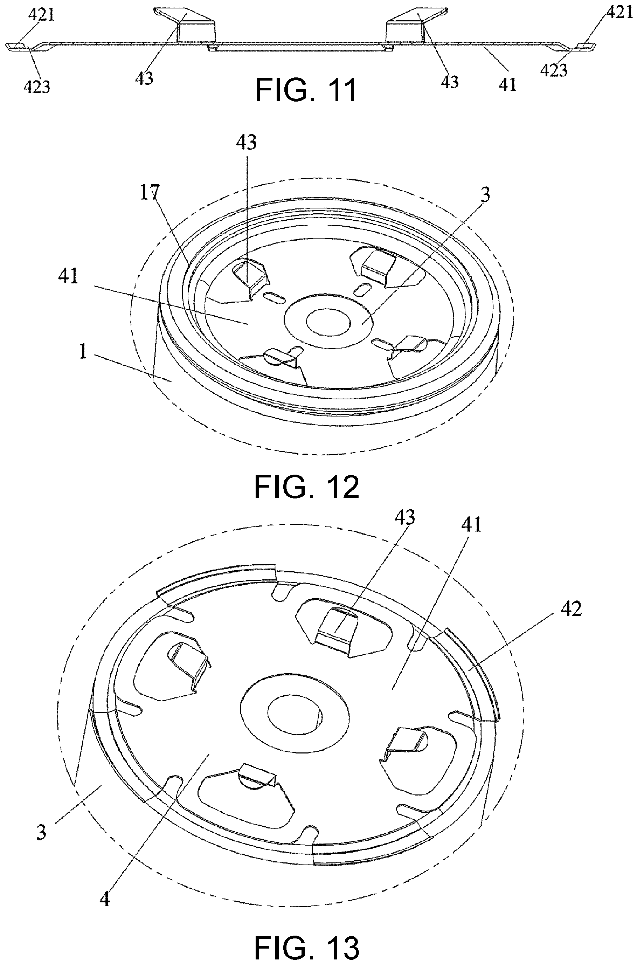

Please refer to FIG. 1 to FIG. 20. The present disclosure provides a secondary battery 10, a battery assembly 20 and an electronic device 30. In the secondary battery 10, by welding the housing connection portion 42 of the current collecting component 4 to the body portion 15 and/or the transition portion 16, the welding position between current collecting component 4 and housing 1 may be set away from the recessed portion 14, so it is possible to reduce the pulling and deformation of the welding region between the current collecting component 4 and the housing 1 during the forming process of the recessed portion 14. Accordingly, it is possible to decrease the damage to the welding marks in the welding region, thereby enhancing the stability of the welding connection between the current collecting component 4 and the housing 1.

Referring to FIG. 1 to FIG. 3, the structure of the secondary battery 10 is further described. The secondary battery 10 includes: a housing 1, an end cap 2, an electrode assembly 3 and a current collecting component 4. A receiving cavity is formed in the housing 1 for accommodating the electrode assembly 3, electrolyte (not shown) and other components. The housing 1 may be in various shapes, such as a cylindrical shape, a prismatic shape, etc. The specific dimension of the housing 1 may be determined according to the specific dimension of electrode assembly 3, for example, the diameter is 46mm, and the height is 80mm, 95mm, 120mm and other specifications. The housing 1 may be made of a variety of materials, such as copper, iron, aluminum, steel, aluminum alloy, etc. In order to prevent the housing 1 from rusting after being used for a long time, the surface of the housing 1 may also be plated with a layer of anti-rust material, such as metallic nickel.

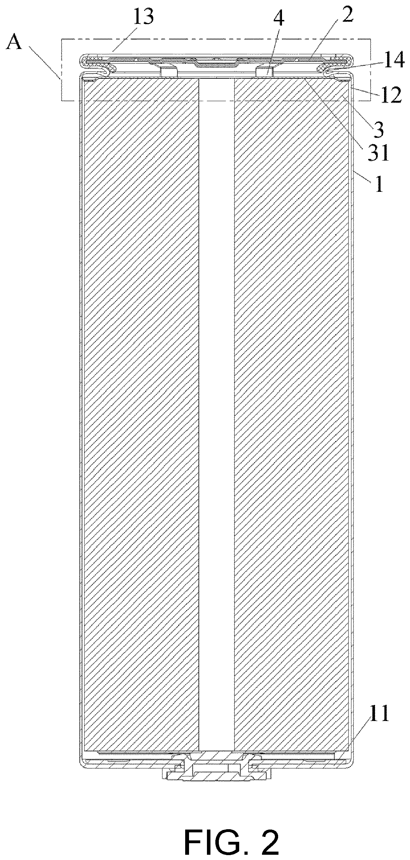

Please refer to FIG. 2 to FIG. 5. In an example of the secondary battery of the present disclosure, the housing 1 is a cylindrical structure. The housing 1 includes an end wall 11 and a side wall 12 surrounding the end wall 11. That is, the housing 1 includes a closed end and an open end. The end wall 11 is a closed end, and the opening 13 opposite to the end wall 11 is an open end. A recessed portion 14 that is recessed toward the interior of the housing 1 is formed on one side of the side wall 12 facing the opening 13. A body portion 15 is formed on the side wall 12 between the recessed portion 14 and the end wall 11, and the body portion 15 extends along the height direction of the secondary battery 10. A transition portion 16 is formed on the side wall 12 between the recessed portion 14 and one end of the body portion 15 away from the end wall 11. The recessed portion 14 is a recessed structure in which the side wall 12 is extruded and deformed toward the interior of the housing 1 under the action of mechanical external force. The recessed portion 14 may be formed by punching the side wall 12 through a forming die, or may be formed by performing roll grooving on the side wall 12 through a roll grooving tool. It will be suffice as along as the recessed portion 14 on the side wall 12 is a recessed structure located in the circumferential direction of the side wall 12. In this example, the recessed portion 14 is formed by performing roll grooving on the side wall 12 through a roll grooving tool. The cross-sectional shape of the recessed portion 14 may be a rectangular, a square or a trapezoidal shape that meets the requirements of user. An extension portion 17 extending toward the center of the opening 13 is further disposed on the side wall 12 on one side of the recessed portion 14 close to the opening 13. There is also a connection portion 18 between the extension portion 17 and the recessed portion 14, and the extension portion 17 and the recessed part 14 are connected through the connecting portion 18. It should be noted that the specific dimension of the recessed portion 14, the extension portion 17 and the connection portion 18 need to be determined according to the dimension specifications of the secondary battery 10, and are not specifically limited in this embodiment. A first side wall 142 is disposed on one side of the recessed portion 14 facing away from the opening 13, one end of the first side wall 142 away from the center of the housing 1 is connected to one end of the transition portion 16, and the other end of the transition portion 16 is connected to one end of the body portion 15 away from the end wall 11. The structural shape of the transition portion 16 may be an arc structure, a bevel structure, or any other structure that allows a smooth transition connection to be formed between the body portion 15 and the recessed portion 14. The body portion 15 extending between the recessed portion 14 and the end wall 11 may have a constant cross-section structure or a non-constant cross-section structure, and it will suffice as long as the requirements of user can be satisfied.

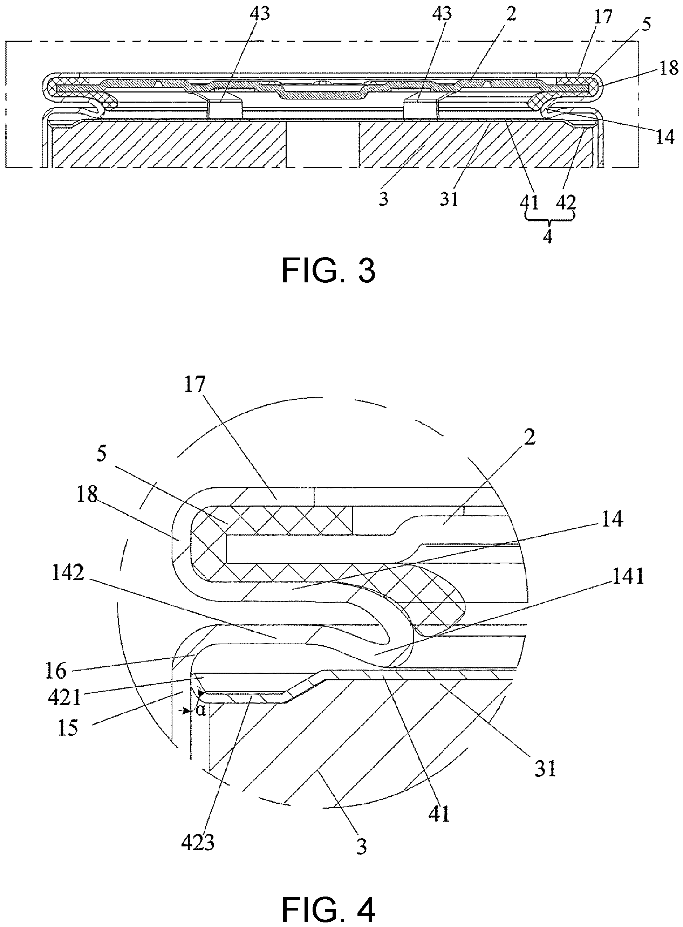

As shown in FIG. 2 and FIG. 3, the electrode assembly 3 is accommodated in the housing 1. The electrode assembly 3 is a component in the secondary battery 10 where electrochemical reactions occur. The housing 1 may contain one or more electrode assemblies 3. The electrode assembly 3 is mainly formed by winding or stacking positive electrode sheets and negative electrode sheets, and a separator is normally disposed between the positive electrode sheet and the negative electrode sheet. The positive electrode sheet includes a positive electrode current collector and a positive electrode active substance layer. The positive electrode active substance layer is coated on the surface of the positive electrode current collector; the positive electrode current collector includes a positive electrode coating region and a positive electrode tab connected to the positive electrode coating region. The positive electrode coating region is coated with the positive electrode active substance layer, and the positive electrode tab is not coated with the positive electrode active substance layer. The negative electrode sheet includes a negative electrode current collector and a negative electrode active substance layer. The negative electrode active substance layer is coated on the surface of the negative electrode current collector; the negative electrode current collector includes a negative electrode coating region and a negative electrode tab connected to the negative electrode coating region, the negative electrode coating region is coated with the negative electrode active substance layer, and the negative electrode tab is not coated with the negative electrode active substance layer. Taking lithium-ion batteries as an example, the material of the positive electrode current collector may be aluminum, and the positive electrode active substance layer includes a positive electrode active substance. The positive electrode active substance may be lithium cobalt oxide, lithium iron phosphate, ternary lithium or lithium manganate, etc. The material of the negative electrode current collector may be copper, and the negative electrode active substance layer may include a negative electrode active substance. The negative electrode active substance may be carbon or silicon. The material of the separator may be PP (polypropylene) or PE (polyethylene), etc. In order to protect and insulate the battery cell, the electrode assembly 3 may also be covered with an insulating film. The insulating film may be synthesized from PP, PE, PET, PVC or other polymer materials.

Please refer to FIG. 2 and FIG. 3. In an example of the secondary battery of the present disclosure, the electrode assembly 3 is sealed in the housing 1. Along the height direction of the secondary battery 10, the electrode assembly 3 is disposed between the end wall 11 and the recessed portion 14, and the recessed portion 14 may limit the axial movement of the electrode assembly 3 between the end wall 11 and the recessed portion 14. A first tab 31 and a second tab are disposed at both ends of the electrode assembly 3 along the height direction of the secondary battery 10, and the first tab 31 and the second tab have opposite polarities, wherein the first tab 31 faces one side of the opening 13, the first tab 31 is a negative electrode tab. It should be noted that in other embodiments, the first tab 31 may also be a positive electrode tab, and the second tab may be a negative electrode tab.

Please refer to FIG. 2 to FIG. 4. The end cap 2 is disposed at the opening 13. The outer periphery of the end cap 2 is clamped between the extension portion 17, the connection portion 18 and the recessed portion 14 through the sealing ring 5, so that the end cap 2 is sealed and fixed at the opening 13. The current collecting component 4 is disposed in the housing 1 and is located between the end cap 2 and the electrode assembly 3. The current collecting component 4 includes a current collector 41 and a housing connection portion 42. The housing connection portion 42 is disposed on the outer periphery of the current collector 41. The housing connection portion 42 and the current collector 41 are electrically connected. There are many electrical connection methods as options, such as a welding connection, an integrated connection or any other methods that can realize the electrical connection between the housing connection portion 42 and the current collector 41. In this embodiment, in order to improve the assembly efficiency, the housing connection portion 42 and the current collector 41 are connected by integral stamping molding. The current collector 41 is electrically connected to the first tab 31. There may be a variety of electrical connection methods as options, such as welding connection, conductive adhesive bonding, or any other methods that can realize the electrical connection between the housing connection portion 42 and the first tab 31. In this embodiment, the current collector 41 and the first tab 31 are connected by welding. Along the height direction of the secondary battery 10, the housing connection portion 42 is located between the first side wall 142 and the electrode assembly 3. One end of the housing connection portion 42 away from the current collector 41 abuts against and is welded to the inner surface of the body portion 15. Along the height direction of the secondary battery 10, the welding position of the housing connection portion 42 on the body portion 15 may be higher than the height position of the electrode assembly 3, lower than the height position of the electrode assembly 3, or consistent with the height position of the electrode assembly 3, the disclosure is not limited thereto.

By abutting and welding one end of the housing connection portion 42 away from the current collector 41 with the inner surface of the body portion 15, the welding position between the housing connection portion 42 and the side wall 12 of the housing 1 may be defined, so that the welding mark is set away from the recessed portion 14 in the height direction. In this way, during the forming process of the recessed portion 14, such as the process of performing roll grooving on the housing 1, by adjusting the roll grooving position, the welding mark may be set away from the recessed portion 14 in the height direction, thereby reducing the pulling and deformation of the welding mark and effectively protecting the integrity of the welding mark, thus improving the stability of the welding connection between current collecting component 4 and the housing 1. In the meantime, because the welding position is located at one end of the first side wall 142 away from the center of the housing 1 in the radial direction, when the opening position is pier-sealed and the pier-sealing force generates a pulling force on the first side wall 142, the welding position between the current collecting component 4 and the housing 1 will not be dramatically deformed. In this manner, it is possible to further protect the integrity of the welding mark at the welding position and further improve the stability of the welding connection between the current collecting component 4 and the housing 1.

It should be noted that in another example of the present disclosure, one end of the housing connection portion 42 away from the current collector 41 may also be abutted against and welded with the inner surface of the transition portion 16, such configuration may also achieve the advantageous effect of the above embodiment. In other embodiments, one end of the housing connection portion 42 away from the current collector 41 may be partially abutted against and welded with the inner surface of the body portion 15, and partially abutted against and welded with the inner surface of the transition portion 16, such configuration may also achieve the advantageous effect described above.

Please refer to FIG. 3 to FIG. 5. In an example of the secondary battery of the present disclosure, one side of the housing connection portion 42 away from the current collector 41 includes a bent portion 421. The free end of the bent portion 421 extends toward the recessed portion 14. The free end of the bent portion 421 is abutted against and welded to the inner surface of body portion 15. The cross section of the bent portion 421 may be a bevel structure, a bent structure that is bent for multiple times, or any bent structures such as a wavy structure. By disposing the bent portion 421, when the housing connection portion 42 is welded to the side wall 12, the bent portion 421 may buffer the welding stress and reduce the transmission of the welding stress to the current collector 41, thereby improving the stability of the welding connection between the current collector 41 and the first tab 31.

It should be noted that in another embodiment of the present disclosure, the bent portion 421 may also be abutted against and welded with the inner surface of the transition portion 16. In this way, the bent portion 421 may also improve the positioning accuracy of the bent portion 421 and the inner surface of the body portion 15 in the radial direction. In other embodiments, the bent portion 421 may also be partially abutted against and welded with the inner surface of the transition portion 16, and partially abutted against and welded with the inner surface of the body portion 15, such configuration may also achieve the advantageous effect described in the above embodiment.

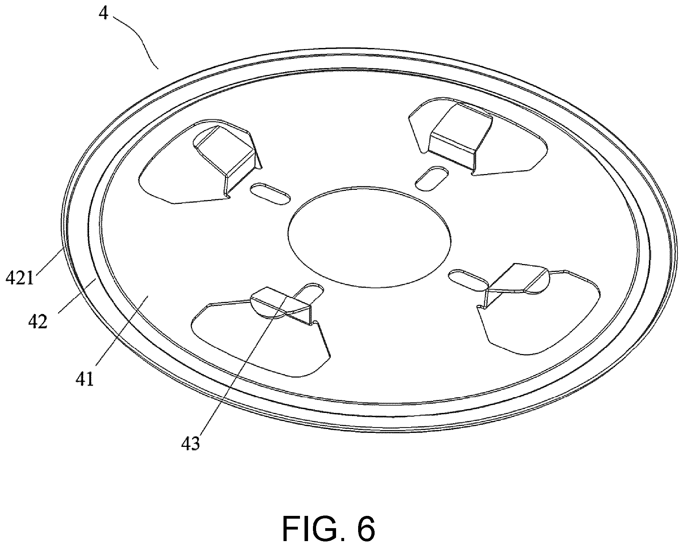

Please refer to FIG. 6 to FIG. 8. In an example of the secondary battery of the present disclosure, the current collector 41 is a disc-shaped structure, the housing connection portion 42 is an annular structure coaxially arranged with the current collector 41, and a bent portion 421 with an annular structure is disposed on one side of the housing connection portion 42 away from the current collector 41, that is, the bent portion 421 is an integral structure that is entirely disposed on the outer periphery of the current collector 41. In this way, the overall rigidity and strength of the current collector 41 is high, the current collecting component 4 is not easily deformed during the welding process, and the welding connection stability is good. In the meantime, the contact area between the bent portion 421 and the side wall 12 of the housing 1 in the circumferential direction is large, so the positioning accuracy is high, which helps to enhance the configuration accuracy of the current collecting component 4.

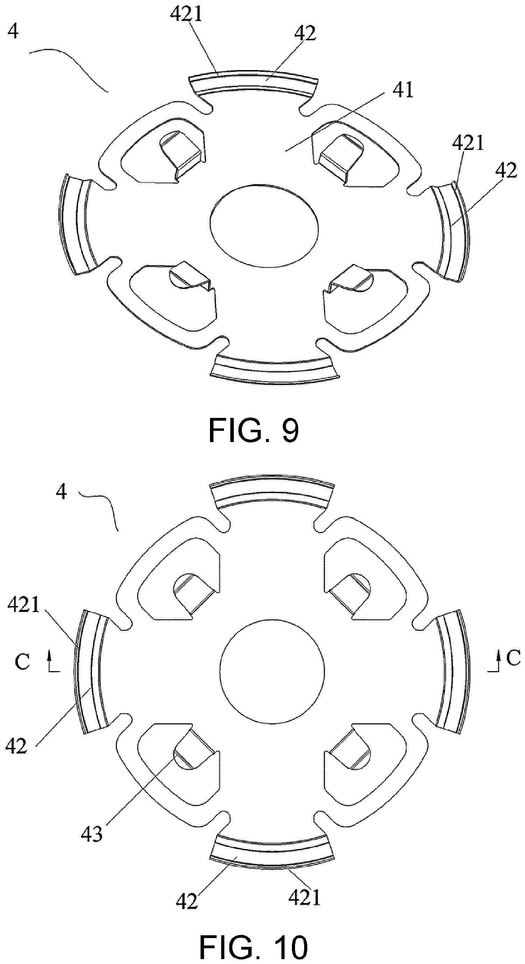

Referring to FIG. 9 to FIG. 11, in an example of the secondary battery of the present disclosure, the current collector 41 is a disk-shaped structure, and there are multiple housing connection portions 42, and the multiple housing connection portions 42 are spaced apart on the outer periphery of the current collector 41. Correspondingly, there are also multiple bent portions 421, and each bent portion 421 corresponds to one housing connection portion 42. In this way, disconnected regions are formed between the multiple housing connection portions 42 in the circumferential direction. Such structure may release the stress generated between the housing connection portions 42 and the side wall 12, and reduce the stress deformation generated by the current collecting component 4 itself.

Please refer to FIG. 3, FIG. 4, FIG. 12 and FIG. 13. In an example of the secondary battery of the present disclosure, in order to facilitate the molding process of the body portion 15, the body portion 15 adopts a constant cross-section structure, and the constant cross-section may be a circular constant cross-section structure, or a polygonal constant cross-section structure, etc. In this embodiment, the body portion 15 is a circular constant cross-section structure, and the body portion 15 is a constant cross-section structure extending in a straight direction, that is, the body portion 15 is a cylindrical structure. There are multiple housing connection portions 42, and multiple housing connection portions 42 are spaced apart on the outer periphery of the current collector 41; the bent portion 421 is disposed corresponding to the housing connection portion 42, and the bent portion 421 is abutted against and welded to the inner surface of the body portion 15; an included angle α is formed between the bent portion 421 and the body portion 15, and the included angle α ranges from 0° to 60°. Preferably, the included angle α ranges from 30° to 60°. The angle α between the bent portion 421 and the body portion 15 is set between 30° and 60°, so that on the one hand, a suitable contact force may be generated between the bent portion 421 and the side wall 12, which may satisfy the positioning requirements between the bent portion 421 and the side wall 12 without causing large contact deformation to the current collecting component 4 itself and affecting the configuration accuracy of the current collecting component 4 itself. On the other hand, by forming an included angle between the bent portion 421 and the body portion 15, an elastic positioning structure may be formed on one side of the current collecting component 4 close to the opening 13 and able to shrink toward the center of the housing 1, thereby facilitating interference-fitting of the current collecting component 4 inside the housing 1. In this way, it is possible to produce a more stable contact force between the bent portion 421 and the inner surface of the body portion 15, thus improving the welding accuracy and stability of welding connection between the current collecting component 4 and the housing 1.

During the assembly process of the secondary battery, before the current collecting component 4 is disposed inside the housing 1, the current collecting component 4 is in a free state, and the radial size of the current collecting component 4 may be greater than or equal to the inner diameter of the housing 1. However, preferably, in an embodiment of the secondary battery of the disclosure, when the current collecting component 4 is in a free state, the radial size of the current collecting component 4 is larger than the inner diameter size of the housing 1. In such design, during the process of assembling the current collecting component 4 into the housing 1, the current collecting component 4 will achieve an interference fitting between current collecting component 4 and the housing 1 through slight deformation, which will help improve the configuration accuracy of the current collecting component 4 inside the housing 1. Please refer to FIG. 4. In an example of the secondary battery of the present disclosure, the housing connection portion 42 also includes a flange portion 422. One end of the flange portion 422 is connected to one side where the bent portion 421 and the body portion 15 are abutted and welded, and the other end of the flange portion 422 is bent toward the interior of the housing 1. The flange portion 422 may be a bevel structure or a curved structure or any other structures that is able to shield the welding of the bent portion 421. The flange portion 422 and the bent portion 421 may be integrally formed or welded, the disclosure is not limited thereto. By disposing the flange portion 422 at the welding position of the bent portion 421, a shielding cavity may be formed between the bent portion 421 and the flange portion 422. The shielding cavity may shield the welding slag generated when the bent portion 421 and the body portion 15 are welded, thus reducing the spatter of the welding slag inside the housing 1, and reducing the probability of the welding slag entering the interior of the electrode assembly 3, so as to effectively mitigating the damage to the electrode assembly 3. In the meantime, because the end portion of the bent portion 421 is connected to the flange portion 422, penetration welding may be adopted for welding the bent portion 421 and the body portion 15, thereby improving the quality of the welding connection.

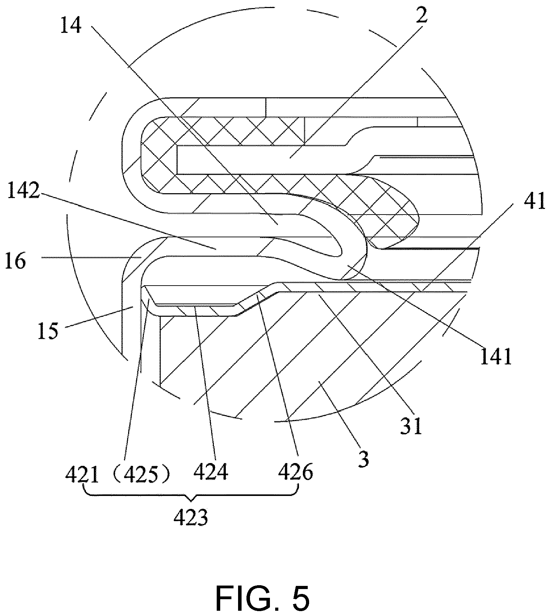

Please refer to FIG. 5, FIG. 8 and FIG. 11. In an example of the secondary battery of the present disclosure, the housing connection portion 42 further includes a groove 423 recessed toward the electrode assembly 3 side. The groove 423 includes a groove bottom wall 424 and is connected to the outer groove wall 425 and the inner groove wall 426 on both sides of the groove bottom wall 424. The outer groove wall 425 is connected with the bent portion 421, and the inner groove wall 426 is connected with the current collector 41. The cross-sectional shape of the groove 423 may be square, rectangular or trapezoidal, and the cross-sectional area of the groove 423 is not limited as long as the cross-sectional area of the groove 423 meets the configuration dimension requirements. The connection between the outer groove wall 425 and the bent portion 421 may mean that the outer groove wall 425 is provided with an additional bent portion 421, and the bent portion 421 is welded or integrally connected to the outer groove wall 425, or it may be that the bent portion 421 is a part of the outer groove wall 425, or it may be that the outer groove wall 425 is the same structural component as the bent portion 421. In this embodiment, the outer groove wall 425 and the bent portion 421 are the same structural component. Such configuration may reduce the number of parts and improve the assembly efficiency of the current collecting component 4. One side of the groove 423 facing the electrode assembly 3 may or may not abut against the end surface of the electrode assembly 3, and the disclosure is not limited thereto. By disposing the groove 423, a height difference is formed between the bottom wall of the groove 423 and the current collector 41, thereby reducing the height of the welding position between the bent portion 421 and the side wall 12, thus saving the height space occupied in the housing 1, which helps to improve the volumetric energy density of the secondary battery 10. In the meantime, because the groove 423 is close to the bent portion 421, when the region of the groove 423 is compacted and positioned, the bent portion 421 may be positioned more accurately, so that the welding accuracy of the bent portion 421 may be enhanced. In addition, the configuration of the groove 423 may also buffer stress when the bent portion 421 is welded to the side wall 12, thereby reducing the deformation of the current collecting component 4 itself caused by welding stress.

In order to improve the accuracy of the welding position and the quality of the welding connection between the current collecting component 4 and the side wall 12, the current collecting component 4 is normally compacted and positioned during the welding connection between the current collecting component 4 and the housing 1. In this embodiment, because the current collecting component 4 is provided with a groove 423, when the current collecting component 4 is positioned, the positioning tool may be a profiling tool that matches the shape of the groove 423. When the profiling tooling compacts the current collecting component 4, the bottom surface of the profiling tooling contacts and compacts the groove bottom wall 424 of the groove 423 to achieve the compacting and positioning of the current collecting component 4 in the axial direction. The side walls of the profiling tooling may abut against the outer groove wall 425 and inner groove wall 426 of the groove 423 to realize the positioning of the current collecting component 4 in the radial direction, and compacts the bent portion 421 and the side wall 12 to ensure the quality of welding connection between the current collecting component 4 and the side wall 12. Of course, in other embodiments, the positioning tooling may not be selected from a profiling tooling. As long as the current collecting component 4 is positioned and compacted in the axial and radial directions, there is no limitation to the specific shape of the positioning tooling.

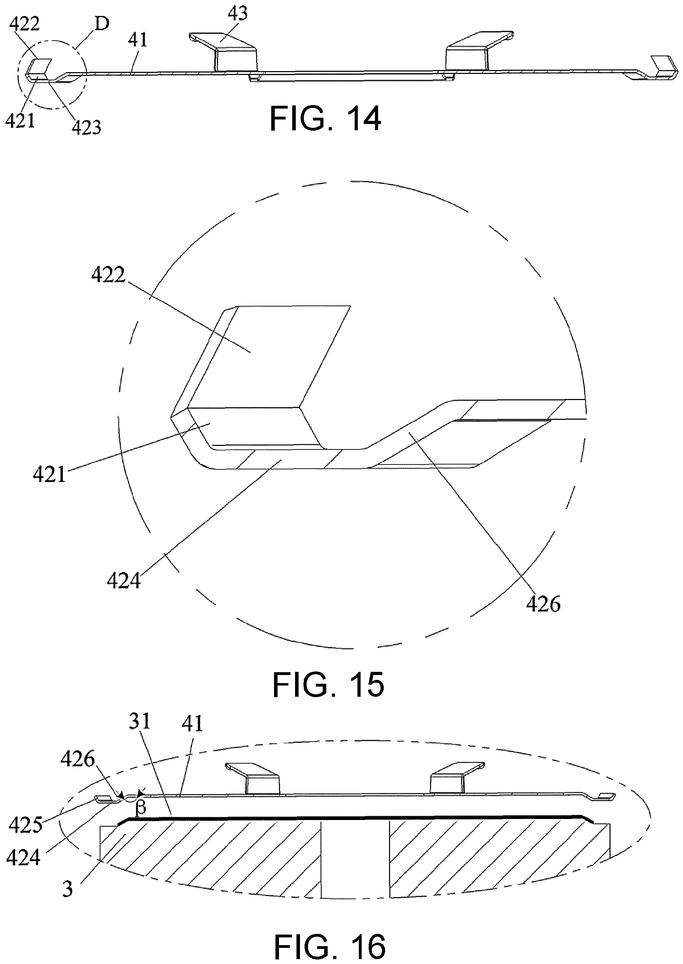

Referring to FIG. 4 and FIG. 16, in an example of the secondary battery of the present disclosure, along the height direction of the secondary battery 10, the orthographic projections of the current collector 41 and the inner groove wall 426 cover the first tab 31. Such configuration may limit the first tab 31 in the gathering cavity formed between the current collector 41 and the inner groove wall 426. In this way, the groove bottom wall 424 may correspond to the region (i.e., the tab cutting region) where the first tab 31 is not disposed on the end surface of the electrode. Accordingly, on the one hand, the configuration height of the groove bottom wall 424 on the end surface of the electrode assembly 3 may be reduced. Therefore, the height of the welding position between the bent portion 421 and the body portion 15 may be further reduced, and the height space occupied in the housing 1 may be further saved; on the other hand, when the groove bottom wall 424 is in close contact and compacted against the region where the first tab 31 is not disposed on the end surface of the electrode, when the pressing force is the same, the positioning accuracy in the height direction is more accurate, which may improve the positioning accuracy of the groove 423 in the height direction of the secondary battery 10, thereby improving the position accuracy of the welding connection between the bent portion 421 and the body portion 15.

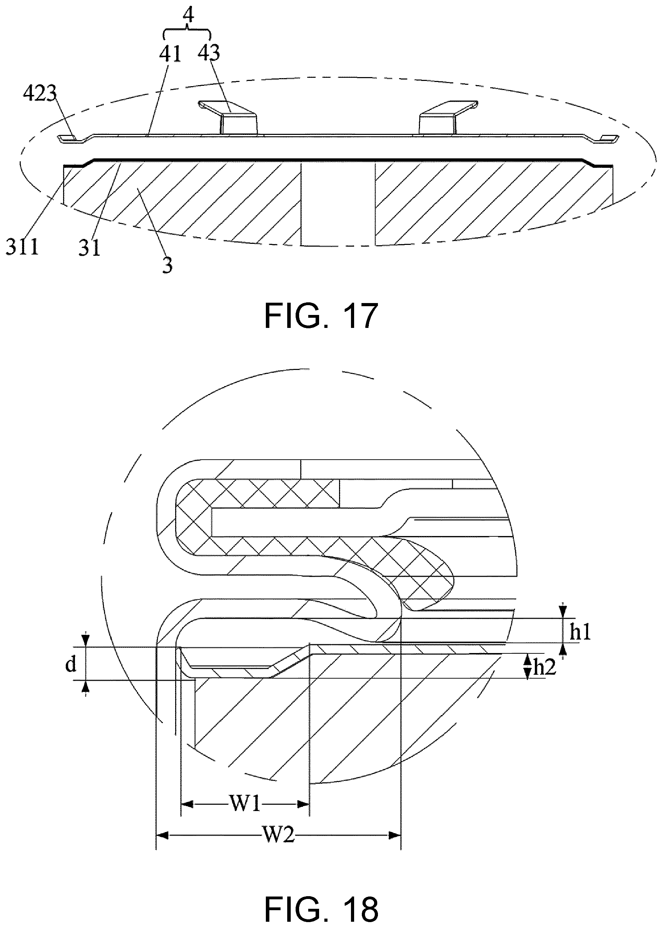

Please refer to FIG. 4 and FIG. 17. In an example of the secondary battery of the present disclosure, along the height direction of the secondary battery 10, the first tab 31 includes an indentation 311 recessed toward one side facing away from the current collecting component 4, and the groove bottom wall 424 of the groove 423 abuts against the indentation 311. The area and shape of the indentation 311 correspond to the shape and position of the groove bottom wall 424, and the depth of the indentation 311 corresponds to the depth of the groove 423. One side of the groove bottom wall 424 facing the electrode assembly 3 abuts against one side of the indentation 311 facing away from the electrode assembly 3. By disposing the indentation 311, on the one hand, rapid positioning between the groove 423 and the indentation 311 may be achieved, thereby improving the positioning efficiency of the current collecting component 4 on the end face of the electrode assembly 3; on the other hand, the configuration of the indentation 311 may reduce the gaps between the stacked first tabs 31 in the region. Therefore, it is possible to improve the positioning accuracy when the groove 423 is compacted and positioned in the height direction.

Please refer to FIG. 16. In an example of the secondary battery of the present disclosure, one end of the inner groove wall 426 of the groove 423 is connected to the groove bottom wall 424, and the other end of the inner groove wall 426 of the groove 423 is connected to the current collector 41 and inclined toward the center of the electrode assembly 3, so that the angle β between the inner groove wall 426 and the groove bottom wall 424 is an obtuse angle. With such configuration, when the groove 423 is compacted against the end surface of the electrode assembly 3, the inner groove wall 426 will generate a radial force on the first tab 31 toward the center of the electrode assembly 3, and the radial force will push the first tab 31 to be stacked and compacted toward the center of the electrode assembly 3, thereby reducing the gaps between the first tabs 31 in the radial direction, thus reducing the inverted insertion of the first tab 31 during the compacting process.

Referring to FIG. 4, FIG. 5 and FIG. 18, in an example of the secondary battery of the present disclosure, along the height direction of the secondary battery 10, the distance between the position where the bent portion 421 abuts the body portion 15 and the outer surface of the groove bottom wall 424 facing the electrode assembly 3 side is d, and 0.3mm≤d≤2.5mm. For example, the dimension d may be 0.3mm, 1.5mm, 2mm or 2.5mm, etc. When the dimension d is less than 0.3mm, the bent portion 421 cannot be well positioned, which affects the accuracy of radial positioning between the housing connection portion 42 and the body portion 15; when the dimension d is greater than 2.5mm, the dimension d will occupy more height space of the housing 1, which is unfavorable for the improvement of the volume energy density of the secondary battery 10. Therefore, in this embodiment, by limiting the dimension d to a range between 0.3mm and 2.5mm, the positioning effect of the bent portion 421 and the dimension of the height space occupied in the housing 1 may be well taken into consideration.

Please refer to FIG. 4, FIG. 5 and FIG. 18. In an example of the secondary battery of the present disclosure, along the height direction of the secondary battery 10, the distance between one side of the current collector 41 facing the electrode assembly 3 and one side of the groove bottom wall 424 facing the electrode assembly 3 is h2, and h2≤2d. If the dimension of h2 is large, the groove 423 will occupy a larger height space in the height direction of the secondary battery 10, which will reduce the volumetric energy density of the secondary battery 10. In this embodiment, limiting the dimension h2 to h2≤2d makes it possible to limit the depth of the groove 423, thereby reducing the configuration space occupied by the groove 423 in the height direction and reducing the influence on the volumetric energy density of the secondary battery 10.

Please refer to FIG. 4, FIG. 5 and FIG. 18. In an example of the secondary battery of the present disclosure, the recessed portion 14 includes a depressing portion 141 that is bent toward the electrode assembly 3 on one side of the recessed portion 14 close to the axis of the secondary battery 10. The depressing portion 141 is at least partially abutted against the current collector 41. There is no limitation to the specific dimension of the depressing portion 141 in the radial direction as long as the depressing portion 141 is at least partially compacted against the current collector 41. By disposing the depressing portion 141, the local region of the recessed portion 14 may be abutted against the current collector 41. When the pier-sealing force is the same, the compressive stress generated between the depressing portion 141 and the current collector 41 is greater, thereby improving the positioning of the current collector 41 in the axial direction. In the meantime, because the depressing portion 141 is disposed on the depressing portion 14, the position of the depressing portion 141 on the recessed portion 14 may be controlled to control the pressure position between the recessed portion 14 and the current collector 41, thereby further improving the accurate compression and positioning of the current collecting component 4 in the axial direction.

The amount of depression of the depressing portion 141 directly affects the amount of pressure generated by the depressing portion 141 and the current collector 41. If the amount of depression is too large, the current collector 41 will be under a greater pressure and prone to pressure deformation, which will affect the dimensional accuracy of the current collector 41. If the amount of depression is too small, the current collector 41 cannot be better pressed and positioned. Preferably, please refer to FIG. 4, FIG. 5 and FIG. 18. In an example of the secondary battery of the present disclosure, along the height direction of the secondary battery 10, the amount of depression of the depressing portion 141 is h1, and 0.1mm≤h1≤1mm. The dimension h1 is the distance along the height direction of the secondary battery 10 between the position where the first side wall 142 connects the transition portion 16 and the position where the depressing portion 141 abuts the current collector 41. In this embodiment, by limiting the dimension h1 to 0.1mm to 1mm, a better compacting effect may be obtained between the depressing portion 141 and the current collector 41 without causing large compression and deformation to the current collector 41 itself and affecting the dimensional accuracy.

Referring to FIG. 4, FIG. 5 and FIG. 18, in an example of the secondary battery of this embodiment, the width of the groove 423 is W1, the radial depth of the recessed portion 14 is W2, and W1 ≤ 0.7 W2. When the width of the groove 423 is greater than 0.7W2, there is a probability that the recessed portion 14 cannot be abutted against the current collector 41 during the pier-sealing process, which affects the positioning effect of the current collecting component 4 and the electrode assembly 3 in the axial direction. In this disclosure, by setting W1≤0.7W2, it is possible to ensure that during the pier-sealing process, the recessed portion 14 is able to be abutted against and compacted against the current collector 41. In the meantime, the force-bearing position of the current collector 41 is kept away from the bent portion, so that the positioning effect of the recessed portion 14 on the electrode assembly 3 in the axial direction will not be affected, but also it is possible to reduce pulling and deformation generated by the bent portion 421 during the pier- sealing process, and the integrity of the welding mark may be effectively protected.

Referring to FIG. 3, FIG. 6 and FIG. 9, in an example of the secondary battery of this embodiment, the current collector 41 includes a lead-out portion 43 on one side of the current collector 41 facing away from the electrode assembly 3, and the lead-out portion 43 is electrically connected to the end cap 2. The connection between the lead-out portion 43 and the current collector 41 may be an integrated connection or a welding connection as long as the electrical connection between the lead-out portion 43 and the current collector 41 is achieved. In the present disclosure, the lead-out portion 43 and the current collector 41 are integrally stamped and connected. The lead-out portion 43 may be abutted against the central region of the end cap 2 or abutted against the edge region of the end cap 2 as long as the electrical connection between the lead-out portion 43 and the end cap 2 is achieved, the disclosure is not limited thereto. By disposing the lead-out portion 43 and electrically connecting the lead-out portion 43 to the end cap 2, a current may be generated on the surface of the end cap 2, thereby producing a thin film on the surface of the end cap 2. The thin film may effectively prevent the erosion of oxides, thereby preventing corrosion on the surface of the end cap 2. Furthermore, in this embodiment, a plurality of lead-out portions 43 are evenly distributed in the circumferential direction of the current collector 41, which may make the current on the surface of the end cap 2 more uniform, thereby achieving a better anti-rust effect on the surface of the end cap 2.

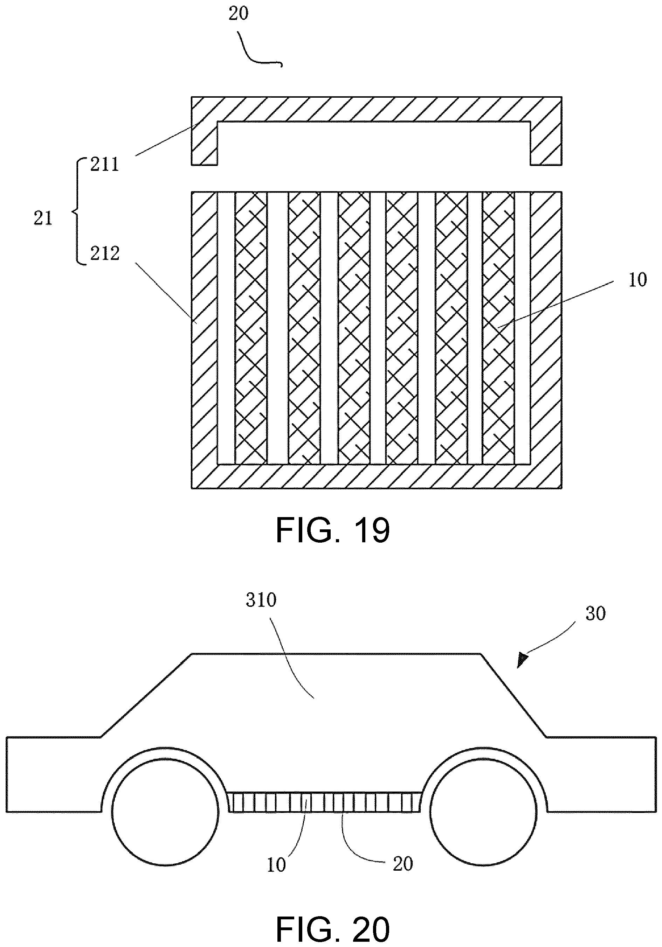

Referring to FIG. 19, the present disclosure further provides a battery assembly 20, which includes the secondary battery 10 described in any one of the above examples. The battery assembly 20 may be a battery module, a battery block or a battery pack, but is not limited thereto. In an embodiment of the present disclosure, the battery assembly 20 includes a box body 21 and at least one secondary battery 10; the box body 21 includes a first box body 211 and a second box body 212, and the first box body 211 and the second box body 212 cover each other to form an accommodation space, and multiple secondary batteries 10 are accommodated in the accommodation space. The multiple secondary batteries 10 may be connected in series and/or in parallel.

The present disclosure further provides an electrical device 30, which may be vehicles, cell phones, portable devices, laptops, ships, spacecraft, electric toys and power tools, etc. Vehicles may be fuel vehicles, gas vehicles or new energy vehicles, and new energy vehicles may be pure electric vehicles, hybrid vehicles or extended-range vehicles, etc.; spacecraft include aircraft, rockets, space shuttles, spaceships, etc.; electric toys include fixed type or mobile electric toys, such as game consoles, electric toy cars, electric toy ships and electric toy airplanes, etc.; electric tools include metal cutting electric tools, grinding electric tools, assembly electric tools and railway electric tools, for example, electric drills, electric grinders, electric wrenches, electric screwdrivers, electric hammers, impact drills, concrete vibrators, planers and more. The embodiments of this disclosure impose no special limitation to the above-mentioned electrical devices.

In the electrical device 30 of the present disclosure, the electrical device 30 includes an operation portion 310 and a battery assembly 20, and the operation portion 310 is electrically connected to the battery assembly 20 to obtain electrical energy for support. The operation portion 310 may be a unit component that can obtain the electric energy of the battery assembly 20 and perform corresponding work, such as a blade rotating unit of a fan, a dust collection working unit of a vacuum cleaner, a wheel driving unit in an electric vehicle, etc. The embodiment of the present disclosure places no special restrictions on the electronic device 30 mentioned above.

Please refer to FIG. 20. In an embodiment of the electronic device 30 of the present disclosure, the electronic device 30 is a vehicle, the operation portion 310 is the body of the vehicle, and the battery assembly 20 is fixedly disposed on the vehicle body to provide driving force for the vehicle to operate.

In the secondary battery of the present disclosure, by abutting and welding one end of the housing connection portion away from the current collector with the inner surface of the body portion, the welding position between the housing connection portion and the side wall of the housing may be defined, so that the welding mark is set away from the recessed portion in the height direction. In this way, during the forming process of the recessed portion, such as the process of performing roll grooving on the housing, by adjusting the roll grooving position, the welding mark may be set away from the recessed portion in the height direction, thereby reducing the pulling and deformation of the welding mark and effectively protecting the integrity of the welding mark, thus improving the stability of the welding connection between the current collecting component and the housing. In the meantime, because the welding position is located at one end of the first side wall away from the center of the housing in the radial direction, when the opening position is pier-sealed and the pier-sealing force generates a pulling force on the first side wall, the welding position between the current collecting component and the housing will not be dramatically deformed. In this manner, it is possible to further protect the integrity of the welding mark at the welding position and further improve the stability of the welding connection between the current collecting component and the housing. Therefore, the disclosure effectively overcomes some practical problems in the related art and has high utilization value and significance in use. The above embodiments are only illustrative of the principles and effects of the present disclosure, but are not intended to limit the present disclosure. Anyone familiar with this technology can modify or change the above embodiments without departing from the spirit and scope of the present disclosure. Therefore, all equivalent modifications or changes made by those with ordinary knowledge in the technical field without departing from the spirit and technical ideas disclosed in the present disclosure shall still be covered by the claims of the present disclosure.

### List of Reference Numerals

10: secondary battery;
1: housing;
11: end wall;
12: side wall;
13: opening;
14: recessed portion;
141: depressing portion;
142: first side wall;
15: body portion;
16: transition portion ;
17: extension portion;
18: connection portion;
2: end cap;
3: electrode assembly;
31: first tab;
311: indentation;
4: current collecting component;
41: current collector;
42: housing connection portion;
421: bent portion;
422: flange portion;
423: groove;
424: groove bottom wall;
425: outer groove wall;
426: inner groove wall;
43: lead-out portion;
5: sealing ring;
20: battery assembly;
21: box body;
211: first box body;
212: second box body;
30: electronic device;
310: operation portion.

## Claims

1. A secondary battery (10) comprising:
a housing (1) comprising an end wall (11) and a side wall (12) surrounding the end wall (11), wherein an opening (13) is formed on one side of the side wall (12) facing away from the end wall (11), and the side wall (12) comprises: a recessed portion (14) formed near the opening (13) and is recessed toward an interior of the housing (1), a body portion (15) extending between the recessed portion (14) and the end wall (11) and a transition portion (16) between the recessed portion (14) and the body portion (15);
an end cap (2) disposed on the opening side to seal the opening (13);
an electrode assembly (3) disposed in the housing (1), wherein a first tab (31) is disposed on one side of the electrode assembly (3) facing the opening (13);
a current collecting component (4) comprising a current collector (41) and a housing connection portion (42), wherein the current collector (41) is electrically connected to the first tab (31), and the housing connection portion (42) is disposed between the recessed portion (14) and the electrode assembly (3);
wherein the housing connection portion (42) is welded to the body portion (15) and/or the transition portion (16).

2. The secondary battery (10) according to claim 1, wherein the housing connection portion (42) comprises a bent portion (421) extending toward the recessed portion (14), and the bent portion (421) abuts against and is welded to the body portion (15) and/or the transition portion (16).

3. The secondary battery (10) according to claim 2, wherein the body portion (15) has a constant cross-section structure, and an included angle is formed between the bent portion (421) and the body portion (15), and the included angle ranges from 0° to 60°.

4. The secondary battery (10) according to claim 2, wherein the housing connection portion (42) further comprises a flange portion (422), and the flange portion (422) is connected to the bent portion (421) and bent toward the interior of the housing (1).

5. The secondary battery (10) according to claim 2, wherein the housing connection portion (42) is disposed on an outer periphery of the current collector (41), the housing connection portion (42) comprises a groove (423) that is recessed toward the electrode assembly side, the groove (423) comprises a groove bottom wall (424) and an outer groove wall (425) and an inner groove wall (426) connected to both sides of the groove bottom wall (424), the outer groove wall (425) is connected to the bent portion (421), and the inner groove wall (426) is connected to the current collector (41).

6. The secondary battery (10) according to claim 5, wherein along a height direction of the secondary battery (10), orthographic projections of the current collector (41) and the inner groove wall (426) cover the first tab (31).

7. The secondary battery (10) according to claim 5, wherein along a height direction of the secondary battery (10), the first tab (31) comprises an indentation (311) recessed toward one side facing away from the current collecting component (4), and the groove bottom wall (424) of the groove (423) abuts against the indentation (311).

8. The secondary battery (10) according to claim 5, wherein along a height direction of the secondary battery (10), a distance between a position where the bent portion (421) abuts the body portion (15) and the groove bottom wall (424) is d, and 0.3mm≤d≤2.5mm.

9. The secondary battery (10) according to claim 5, wherein along a radial direction of the secondary battery (10), a width of the groove (423) is W1, a radial depth of the recessed portion (14) is W2, and W1≤0.7W2.

10. The secondary battery (10) according to claim 8, wherein along the height direction of the secondary battery (10), a distance between the current collector (41) and the groove bottom wall (424) is h2, and d≥0.5h2.

11. The secondary battery (10) according to claim 1, wherein the recessed portion (14) comprises a depressing portion (141) bent toward the electrode assembly (3) side on one side the recessed portion (14) close to an axis of the secondary battery (10), and the depressing portion (141) at least partially abuts against the current collector (41).

12. The secondary battery (10) according to claim 1, wherein there are a plurality of housing connection portions (42), and the plurality of housing connection portions (42) are spaced apart on an outer periphery of the current collector (41).

13. The secondary battery (10) according to claim 1, wherein the current collector (41) comprises a lead-out portion (43) on one side the current collector (41) facing away from the electrode assembly (3), and the lead-out portion (43) is electrically connected to the end cap (2).

14. A battery assembly (20) comprising the secondary battery (10) according to any one of claims 1-13.

15. An electronic device (30) comprising the battery assembly (20) according to claim 14.

## Amended claims

### Amended claims in accordance with Rule 137(2) EPC.

1. A secondary battery (10) comprising:
a housing (1) comprising an end wall (11) and a side wall (12) surrounding the end wall (11), wherein an opening (13) is formed on one side of the side wall (12) facing away from the end wall (11), and the side wall (12) comprises: a recessed portion (14) formed near the opening (13) and is recessed toward an interior of the housing (1), a body portion (15) extending between the recessed portion (14) and the end wall (11) and extending along a height direction of the secondary battery (10);
an end cap (2) disposed on the opening side to seal the opening (13);
an electrode assembly (3) disposed in the housing (1), wherein a first tab (31) is disposed on one side of the electrode assembly (3) facing the opening (13);
a current collecting component (4) comprising a current collector (41) and a housing connection portion (42), wherein the current collector (41) is electrically connected to the first tab (31), and the housing connection portion (42) is disposed between the recessed portion (14) and the electrode assembly (3);
wherein the secondary battery is **characterized in that**
the side wall (12) further comprises a transition portion (16) formed on one end of the body portion (15) away from the end wall (11) and the housing connection portion (42) is welded to the body portion (15) and/or the transition portion (16).

2. The secondary battery (10) according to claim 1, wherein the housing connection portion (42) comprises a bent portion (421) extending toward the recessed portion (14), and the bent portion (421) abuts against and is welded to the body portion (15) and/or the transition portion (16).

3. The secondary battery (10) according to claim 2, wherein the body portion (15) has a constant cross-section structure, and an included angle is formed between the bent portion (421) and the body portion (15), and the included angle ranges from 0° to 60°.

4. The secondary battery (10) according to claim 2, wherein the housing connection portion (42) further comprises a flange portion (422), and the flange portion (422) is connected to the bent portion (421) and bent toward the interior of the housing (1).

5. The secondary battery (10) according to claim 2, wherein the housing connection portion (42) is disposed on an outer periphery of the current collector (41), the housing connection portion (42) comprises a groove (423) that is recessed toward the electrode assembly side, the groove (423) comprises a groove bottom wall (424) and an outer groove wall (425) and an inner groove wall (426) connected to both sides of the groove bottom wall (424), the outer groove wall (425) is connected to the bent portion (421), and the inner groove wall (426) is connected to the current collector (41).

6. The secondary battery (10) according to claim 5, wherein along the height direction of the secondary battery (10), orthographic projections of the current collector (41) and the inner groove wall (426) cover the first tab (31).

7. The secondary battery (10) according to claim 5, wherein along the height direction of the secondary battery (10), the first tab (31) comprises an indentation (311) recessed toward one side facing away from the current collecting component (4), and the groove bottom wall (424) of the groove (423) abuts against the indentation (311).

8. The secondary battery (10) according to claim 5, wherein along the height direction of the secondary battery (10), a distance between a position where the bent portion (421) abuts the body portion (15) and the groove bottom wall (424) is d, and 0.3mm≤d≤2.5mm.

9. The secondary battery (10) according to claim 5, wherein along a radial direction of the secondary battery (10), a width of the groove (423) is W1, a radial depth of the recessed portion (14) is W2, and W1≤0.7W2.

10. The secondary battery (10) according to claim 8, wherein along the height direction of the secondary battery (10), a distance between the current collector (41) and the groove bottom wall (424) is h2, and d≥0.5h2.

11. The secondary battery (10) according to claim 1, wherein the recessed portion (14) comprises a depressing portion (141) bent toward the electrode assembly (3) side on one side the recessed portion (14) close to an axis of the secondary battery (10), and the depressing portion (141) at least partially abuts against the current collector (41).

12. The secondary battery (10) according to claim 1, wherein there are a plurality of housing connection portions (42), and the plurality of housing connection portions (42) are spaced apart on an outer periphery of the current collector (41).

13. The secondary battery (10) according to claim 1, wherein the current collector (41) comprises a lead-out portion (43) on one side the current collector (41) facing away from the electrode assembly (3), and the lead-out portion (43) is electrically connected to the end cap (2).

14. A battery assembly (20) comprising the secondary battery (10) according to any one of claims 1-13.

15. An electronic device (30) comprising the battery assembly (20) according to claim 14.
